# EUROPEAN PATENT APPLICATION

(11) **EP 1 378 819 A2**
(43) Date of publication of application: **07.01.2004**
(21) Application number: 03254033.8
(22) Date of filing: 25.06.2003
(51) Int. Cl.: G06F 3/033

(54) **Reconfigurable user interface**

(30) Priority: 01.07.2002 US 186435
(71) Applicant: Nokia Corporation, 02150 Espoo (FI)
(72) Inventor: Hultcrantz, Johanna, 583 34 Linköping (SE)
(74) Representative: Piotrowicz, Pawel Jan Andrzej

(57) **Abstract**

Devices and methods are disclosed for providing a reconfigurable user interface. The user interface includes a row of folders and a column of bookmarks. The number and sizes of the folders and bookmarks may be selected by the user or chosen to match a particular display device.

## Description

### FIELD OF THE INVENTION

The invention relates to user interfaces. More particularly, the invention provides methods and devices for customizing the size and appearance of user interface elements.

### BACKGROUND OF THE INVENTION

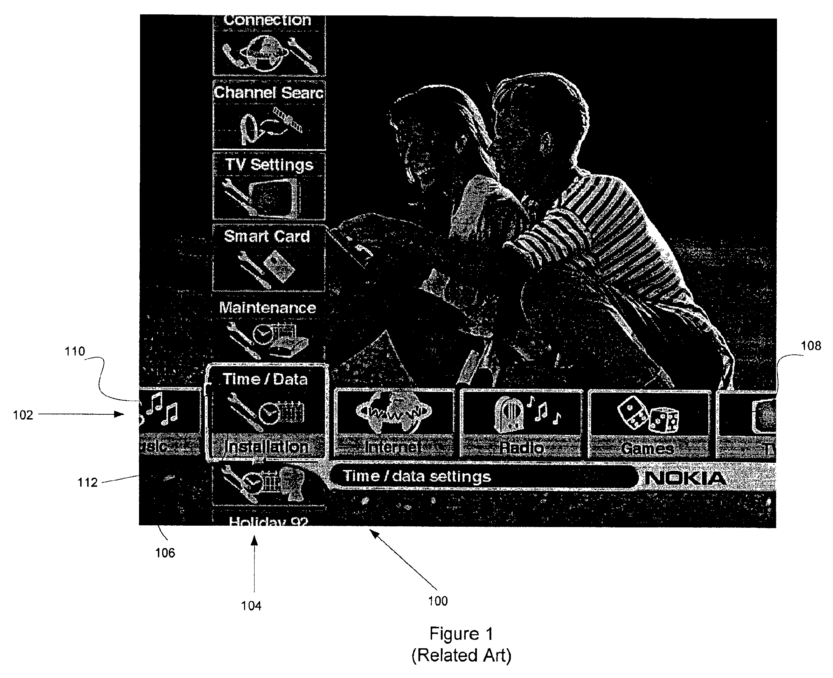

Set-top boxes and televisions are being used to provide an increasing number of services to users. As the number of services and the complexity of the hardware have increased, new user interfaces have been developed to assist users in entering and receiving information. Figure 1 shows a related art user interface 100 that includes a row of folders 102 and a column of bookmarks 104. The scrollable cross point interface allows users to navigate through a large amount of information while minimizing the disruption to the display.

A user can navigate through the folders in row 102 by pressing right and left keys on a remote control device to move folders and bookmarks under a focus area 112. The user can also navigate through the bookmarks in column 104 by pressing up and down keys on the remote control. As is apparent from Figure 1, additional folders and bookmarks may be displayed by entering the appropriate commands. For example, when folder 106 is under focus area 112 and the user presses the right key on the remote control, folder 108 comes into view and folder 110 is removed from user interface 100. Focus area 112 remains stationary while folders and bookmarks move under focus area 112 in response to commands from a user.

User interface 100 includes four folders and six bookmarks, i.e., four complete folders and 6 complete bookmarks are in view. The number of folders and bookmarks is fixed. As a result, when displayed on a relatively large television screen, the folders and bookmarks are relatively large and consume more of the picture area than is necessary. Moreover, users are not able to increase the size of the folders and bookmarks to compensate for poor vision or other reasons.

Therefore, there exists a need in the art for systems and methods that allow users to customize the size and number of user interface elements.

### SUMMARY OF THE INVENTION

One or more of the above-mentioned needs in the art are satisfied by the disclosed systems and methods that allow a user to customize the configuration of a user interface. The number and sizes of folders and bookmarks may be set by the user or chosen to match a display screen. As a result, the user interface can be configured to take advantage of a large display or compensate for a user's poor vision.

A first embodiment of the invention provides an apparatus for generating a user interface for display on a display device. The apparatus comprising a processor programmed to generate a user interface. The user interface includes a folder row containing folders and a bookmark column intersecting the folder row and containing bookmarks. At least one of the number of folders or the number of bookmarks displayed is determined by a user of the user interface.

In another embodiment, a method of generating a user interface for displaying folders and bookmarks on a display screen is provided. The method includes receiving scale information. A row of folders having a number of folders determined by the scale information is generated and a column of bookmarks intersecting the row of folders and having a number of bookmarks determined by the scale information is generated.

In yet another embodiment of the invention, a set-top box that generates a user interface for display on a display device is provided. The set-top box includes a content database that contains user interface content and a graphical objects database that contains user interface graphical objects. An interface generator receives scale information and generates the user interface by arranging the content and graphical objects into a row of folders and a column of bookmarks such that the number of folders and number of rows correspond to the scale information.

In other embodiments of the invention, computer-executable instructions for implementing the disclosed methods are stored as control logic or computer-readable instructions on computer-readable media, such as an optical or magnetic disk.

### BRIEF DESCRIPTION OF THE DRAWINGS

The present invention is illustrated by way of example and not limited in the accompanying figures in which like reference numerals indicate similar elements and in which:
Figure 1 shows a related art user interface screen having a fixed number of elements;
Figure 2 shows a system for generating a custom user interface, in accordance with an embodiment of the invention;
Figure 3 shows a user interface having six folders and eight bookmarks, in accordance with an embodiment of the invention;
Figure 4 shows a user interface having three folders and four bookmarks, in accordance with an embodiment of the invention;
Figure 5 illustrates a method of generating a user interface, in accordance with an embodiment of the invention; and
Figure 6 shows a user interface having no icons in accordance with an embodiment of the invention.

### DETAILED DESCRIPTION OF THE INVENTION

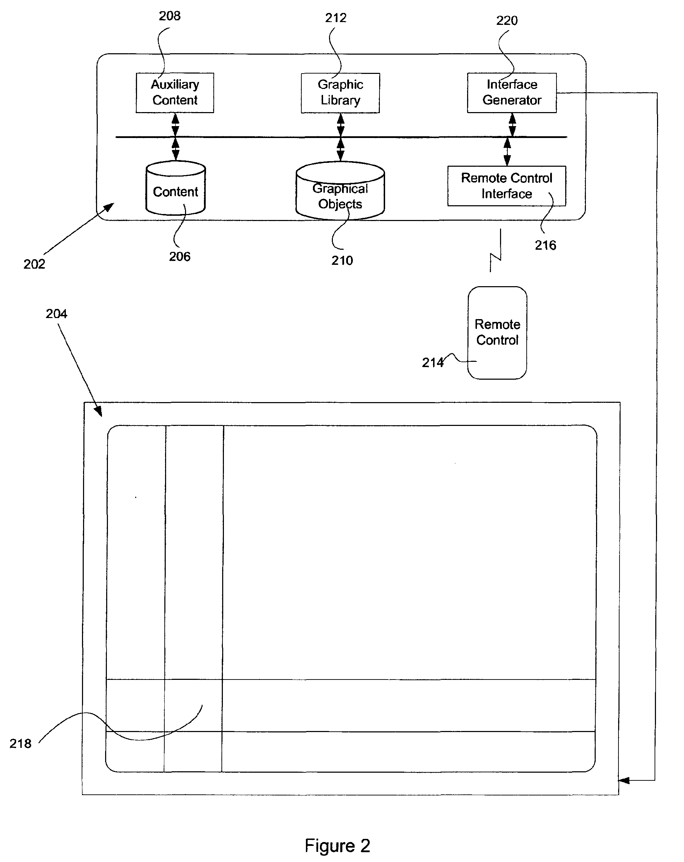

Figure 2 illustrates a system for generating and displaying a user interface in accordance with an embodiment of the invention. A set-top box 202 is coupled to a television 204. In one embodiment, set-top box 202 receives a digital signal, such as an MPEG II video signal, and converts the signal into a format suitable for a television, such as an NTSC signal. One skilled in the art will appreciate that some or all of the components or functions can be performed by the components in set-top box 202 may be incorporated into television 204. Some or all of the functions can also be performed by a processor programmed with computer executable instructions.

Set-top box 202 may include a content database 206 that contains content that will be displayed on a user interface. Content may include text describing folders and bookmarks. Auxiliary content 208 may include content received from external sources, such as a computer devices coupled to set-top box 202. A graphical objects database 210 may be included to store graphical objects, such as icons. A graphical library 212 may be included to retrieve graphical objects from graphical objects database 210 and manipulate those objects. For example, graphical objects database 210 may store generic graphical icons and graphic library 212 may customize the appearance of some of the generic icons for a particular purpose.

A user may use a remote control device 214 for entering commands. Remote control 214 is coupled to a remote control interface 216. Set-top box 202 may be coupled to other input devices, such as a keyboard, joystick or a mouse. In one embodiment of the invention, remote control 214 is used to enter scale information. Scale information may be any information that can be used to determine a desired number of folders and bookmarks to display on a user interface 218. In one embodiment, scale information includes the desired number of folders and bookmarks and is provided by the user. In another embodiment of the invention, scale information includes the number of pixels on a display screen. In yet another embodiment, scale information may be provided by a user-selected numeric scale (eg., level 1, level 2, etc.).

One skilled in the art will appreciate that a variety of scale information may be used to set the number of folders and bookmarks in user interface 218. For example, a user may enter the model number of television 204 and set-top box 202 may determine an appropriate number of folders and bookmarks based on the size of the display for that particular model number. A database (not shown) may be included for associating model numbers with preferred numbers of folders and bookmarks. In an alternative embodiment, television 204 may provide scale information directly to set-top box 202. The scale information may represent the model number of the television or display screen size.

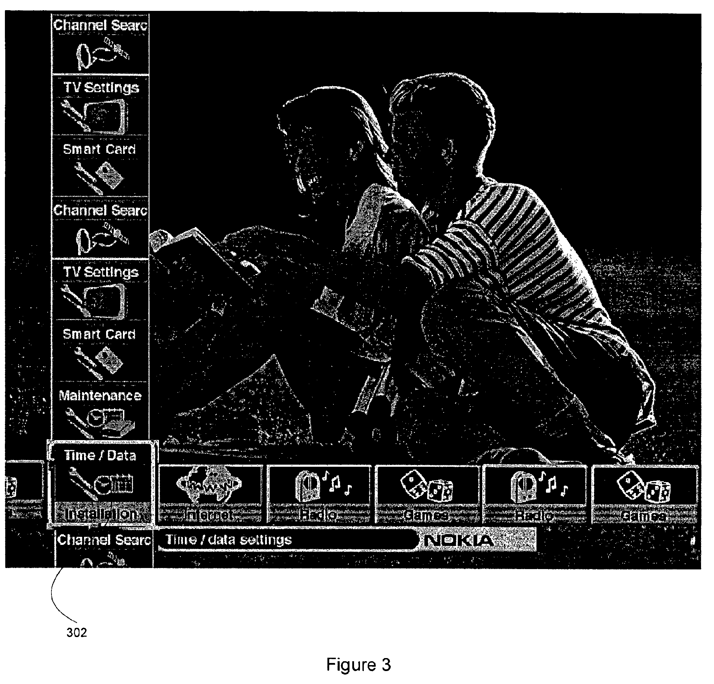

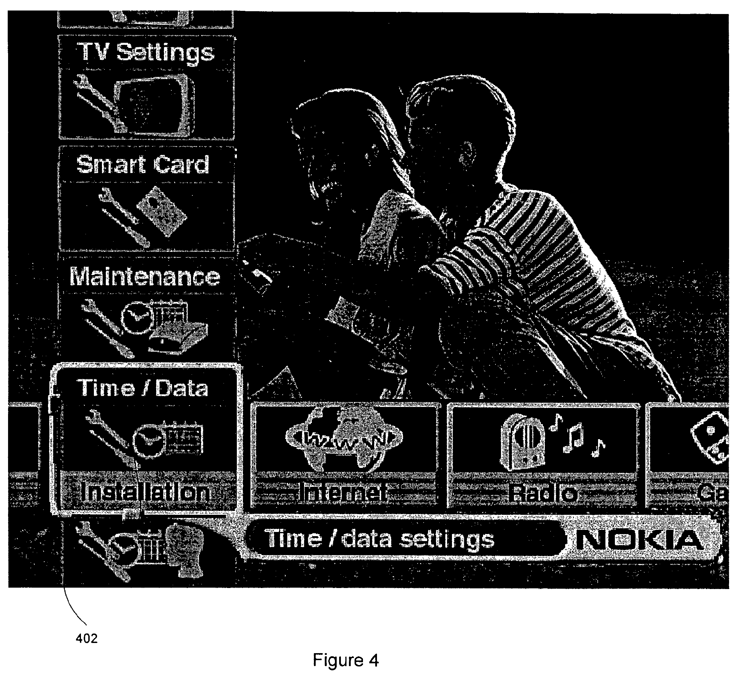

An interface generator 220 may be included for generating user interface 218. The number of folders in a folder row and the number of bookmarks in a bookmark column are a function of the scale information. Figure 3 shows a user interface 302 having six folders and eight bookmarks. As used herein, a bookmark is a function or feature and a folder contains bookmarks having common attributes. Interface 302 may be used with relatively large displays to present a large amount of information to the user will minimizing disruption to the background scene. Figure 4 shows a user interface 402 having three folders and four bookmarks. User interface 402 may be used by persons with poor eyesight.

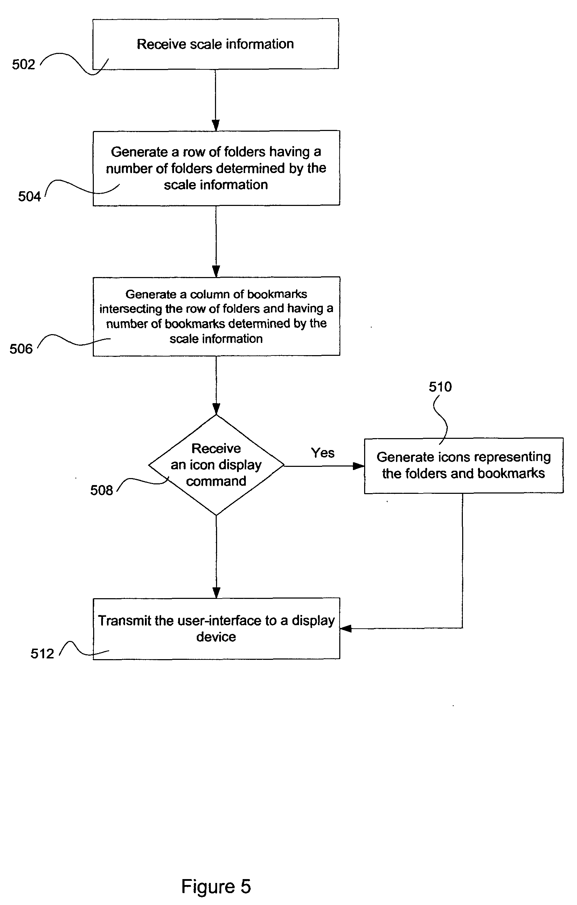

Figure 5 illustrates a method of generating a user interface in accordance with an embodiment of the invention. First, in step 502 a set-top box receives scale information, such as from a user-controlled remote control. Next, in step 504 the set-top box generates a row of folders in which the number of folders is determined by the scale information. In step 506 the set-top box then generates a column of bookmarks that intersects the row folders and in which the number of bookmarks is determined by the scale information.

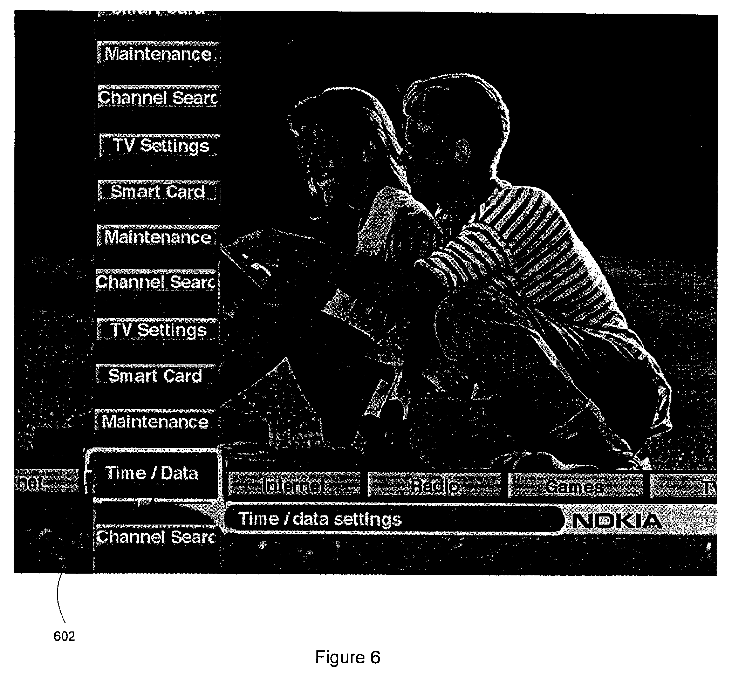

In step 508, the set-top box may receive an icon display command. In order to minimize the disruption to the background image and to maximize the number of folders and bookmarks displayed to the user, the user may choose to not display icons. Figure 6 shows a user interface 602 that does not include icons.

In step 510, the set-top box generates icons representing the folders and bookmarks. Finally, the set-top box may transmit the user interface to a display device, such as a television, in step 512.

While the invention has been described with respect to specific examples including presently preferred modes of carrying out the invention, those skilled in the art will appreciate that there are numerous variations and permutations of the above described systems and techniques that fall within the spirit and scope of the invention as set forth in the appended claims. For example, in alternative embodiments folders may be displayed in a column and bookmarks may be display in a row.

## Claims

1. Apparatus (202) for generating a user interface (218; 302; 402; 602) for display on a display device (204), the user interface comprising:
a folder row containing folders; and
a bookmark column intersecting the folder row and containing bookmarks;
wherein at least one of the number of folders displayed and the number of bookmarks displayed is determined by a user.

2. Apparatus according to claim 1, comprising a processor programmed to generate said user interface (218; 302; 402; 602).

3. Apparatus according to claim 1 or 2, which is a display device that generates a user interface (218; 302; 402; 602) in response to receiving an input signal.

4. Apparatus according to any preceding claim, wherein the other one of the number of folders displayed and the number of bookmarks displayed is determined by the user of the apparatus.

5. Apparatus (202) for generating a user interface (218; 302; 402; 602) for display on a display device or apparatus (202) according to any preceding claim, said display device (204) having a horizontal width and a vertical length, the user interface comprising:
a folder row containing folders;
a bookmark column intersecting the folder row and containing bookmarks;
wherein the number of folders displayed is a function of the horizontal width of the display screen and the number of bookmarks displayed is a function of the vertical length of the display screen.

6. Apparatus according to any preceding claim, wherein the user interface (218; 302; 402) further includes icons representing the folders and the bookmarks.

7. A set-top box (202) that generates a user interface (218; 302; 402; 602) for display on a display device (204), the set-top box comprising:
a content database (206) that contains user interface content;
a graphical objects database (210) that contains user interface graphical objects;
an interface generator (220) that receives scale information and generates the user interface by arranging the content and graphical objects into a row of folders and a column of bookmarks such that the number of folders and number of rows correspond to the scale information.

8. A set-top box according to claim 7, further including a remote control interface (216) that receives the scale information from a user.

9. A method of generating a user interface (218; 302; 402; 602) for displaying folders and bookmarks on a display screen, the method comprising:
receiving scale information;
generating a row of folders having a number of folders determined by the scale information; and
generating a column of bookmarks intersecting the row of folders and having a number of bookmarks determined by the scale information.

10. A method according to claim 9, further including:
receiving an icon display command from a user; and
generating icons representing the folders and bookmarks when the user chooses to display icons.

11. A set-top box or method according to any one of claims 7 to 10, wherein the scale information is received from a display device.

12. A set-top box or method according to any one of claims 7 to 11, wherein the scale information is received from a user.
